# EUROPEAN PATENT SPECIFICATION

(11) **EP 3 689 703 B1**
(45) Date of publication and mention of the grant of the patent: **08.06.2022**
(21) Application number: 19211668.9
(22) Date of filing: 26.11.2019
(51) Int. Cl.: B61D 15/00, E01B 27/00, B65G 23/32, B65G 13/07, B65G 23/10

(54) **RAILWAY WAGON WITH CONVEYOR BELT**
EISENBAHNWAGEN MIT FÖRDERBAND
WAGON FERROVIAIRE AVEC BANDE TRANSPORTEUSE

(30) Priority: 30.01.2019 IT 201900001329
(43) Date of publication of application: 05.08.2020
(73) Proprietor: SRT SOCIETA' A RESPONSABILITA' LIMITATA CON SOCIO UNICO, 00158 Roma (IT)
(72) Inventor: SALCICCIA, Gilberto, 00196 Roma (IT)
(74) Representative: PGA S.p.A.

(56) References cited:
- CN-Y- 201 165 208
- US-A1- 2005 281 643
- US-B2- 7 467 708

## Description

### FIELD OF THE INVENTION

The present invention relates to a conveyor for handling material, for example inert material, usable for example in the railway sector, and a railway wagon comprising said conveyor.

### PRIOR ART

Railway wagons provided with at least one conveyor configured for the movement of inert materials such as crushed stone, bricks and scraps deriving from excavation or remaking of railway ballast are known today. In particular, the conveyor belts installed on railway wagons are now used for unloading, loading, supporting and transporting crushed stone.

The known conveyors have a closed-loop belt wound around a pair of end rollers; a plurality of support bars in metallic material are fixed by rivets to an internal surface of the belt: the bars, parallel to each other, are placed transversely to a perimeter development of the belt. The bars are uniformly engaged throughout the perimeter development of the belt in order to support the belt during the load handling step: the bars are therefore movable together with the belt. At the lateral ends emerging from the belt, each bar is hinged by means of bearings to a chain developing as a closed ring laterally to the belt and which is driven by a single motor: the movement of the chain, and therefore of the bars, allows movement the belt riveted to said bars.

Although widely used, the known conveyors exhibit various drawbacks, among which the bulky presence of the bars fixed along the entire perimeter development of the belt which make the whole structure excessively voluminous; in addition to affecting the overall dimensions of the conveyor, this configuration weighs heavily on the overall weight of the entire structure and therefore on the power required to operate the conveyor. The need to install high-power motors as well as affecting the dimensions weighs on the production and operating costs of the conveyor.

A further drawback is determined by the complex structure of the conveyor; in fact, if it is necessary to remove one or more bars from the conveyor, for maintenance or repair, it is essential to proceed with the removal of the entire chain and the decoupling of each individual bar fixed to the belt by means of rivets. These operations require the intervention of highly qualified personnel and long intervention times with consequent considerable downtime. Furthermore, the complex structure of the conveyor negatively affects the need for belt replacement. In this situation, it is in fact necessary to proceed with the decoupling of each individual bar riveted on the belt; also this processing requires long and expensive intervention times, which consequently cause expensive downtime.

A further drawback is determined by the type of movement of the bars (on bearings) dragged by the catenary. The bearings associated with the catenary are subjected to locking due to working conditions (transport of debris and inert material); in the event of blocking, there would be a considerable increase in friction (transition from rolling friction to sliding friction) with a consequent increase in the force required to move the belt.

A further example of conveyor is described in patent application no. US 2005/281643 A1. In particular, this application is directed to a railway wagon for the transport of crushed stone comprising a platform on which a container for containing crushed stone is housed; above the body there is a conveyor configured to move the crushed stone above the body and unload it inside the body. The conveyor consists of a frame to which a first and a second end return roller are fixed, between which there are a plurality of idle rollers: one of said end return rollers is of the motorized type. The conveyor further comprises a belt wound in a closed loop around the rollers and which is moved by the motorized roller: the idle rollers are configured to support the belt. The rollers are connected to each other only by means of the belt which, moved by the motorized roller, allows the rotation of the plurality of idle rollers. The belt is configured to allow the crushed stone to move over the railway wagon.

The conveyor structure described in patent application no. US 2005/281643 A1 is an improvement over the previous solution in that it has a more compact and simple structure. However, although improving on the previous solutions, the conveyor structure described in patent application no. US 2005/281643 A1 is not free from limitations and drawbacks. In fact, it should be noted that the movement of the plurality of rollers by means of the same belt is of poor efficiency and requires the installation of high-power motors configured to drive the motorized roller, which is the only truly active member for moving the belt: the plurality of idle rollers, although useful to support the belt, represent elements resistant to the movement of the belt. The high power required requires the presence of large motors, a condition that negatively affects the overall costs of the railway wagon and the dimensions, which are not very compact, of the conveyor.

### OBJECT OF THE INVENTION

The object of the present invention is to solve the drawbacks and/or limitations of the above prior art.

A first object of the invention is to provide a conveyor, for example of crushed stone or sleepers for railway ballast, which has a compact structure but which at the same time can guarantee the efficient movement of heavy goods/material. A further object is to provide a conveyor capable of operating with reduced installed powers. It is therefore an object of the present invention to provide an easy to install and low cost conveyor.

A further object is to provide reliable transport capable of minimizing maintenance operations. At the same time, it is an object of the invention to provide a conveyor having a simple structure capable of facilitating any maintenance and/or replacement of components in order to reduce the costs and times of the intervention. Another object of the invention is to provide a railway wagon comprising said conveyor for handling material, for example material usable for the construction of structures in the railway sector.

These and yet other objects, which will become more apparent from the following description, are substantially achieved by a conveyor and a railway wagon according to what is expressed in one or more of the accompanying claims and/or the following aspects, taken alone or in any combination with each other or in combination with any one of the appended claims and/or in combination with any of the other aspects or features described below.

### BRIEF DESCRIPTION OF THE DRAWINGS

Some embodiments and some aspects of the invention are described hereinafter with reference to the accompanying drawings, provided only for illustrative and, therefore, non-limiting purposes, in which:
- Figure 1 is a perspective view of a conveyor according to the present invention;
- Figure 1A is a detail of the conveyor of figure 1;
- Figure 1B schematically shows conveyor transmission members without dragging elements so as to allow the visualization of driving wheels of said transmission members;
- Figure 1C is a top view of the conveyor portion of figure 1A;
- Figure 1D is a partially bottom view of the conveyor;
- Figure 2 is a cross-section of the conveyor of figure 1;
- Figure 2A is a detail view of the conveyor of figure 2;
- Figure 3 is a detail view of a conveyor according to the present invention;
- Figure 4 is a section view, according to the line IV-IV, of the conveyor of figure 1;
- Figure 5 is a perspective view of a conveyor according to a further embodiment according to the present invention;
- Figure 6 is a schematic view of a railway wagon according to the present invention;
- Figure 7 is a detail view of a railway wagon according to the present invention.

### DEFINITIONS

### Control unit

The conveyor described and claimed herein may comprise a control unit responsible for controlling the motors and/or actuators and/or sensors of the conveyor for managing the operations carried out by the latter. The control unit can be only one or be formed by a plurality of different control units according to the design choices and the operational needs. The term control unit means an electronic component which can comprise at least one of: a digital processor (for example comprising at least one selected from the group of: CPU, GPU, GPGPU), a memory (or memories), an analog circuit, or a combination of one or more digital processing units with one or more analog circuits. The control unit can be "configured" or "programmed" to perform some steps: this can be done in practice by any means that allows configuring or programming the control unit. For example, in the case of a control unit comprising one or more CPUs and one or more memories, one or more programs can be stored in appropriate memory banks connected to the CPU or to the CPUs; the program or programs contain instructions which, when executed by the CPU or the CPUs, program or configure the control unit to perform the operations described in relation to the control unit. Alternatively, if the control unit is or includes analog circuitry, then the control unit circuit may be designed to include circuitry configured, in use, for processing electrical signals so as to perform the steps related to control unit. The control unit may comprise one or more digital units, for example of the microprocessor type, or one or more analog units, or a suitable combination of digital and analog units; the control unit can be configured for coordinating all the actions necessary for executing an instruction and instruction sets.

### Actuator

The term actuator means any device capable of causing movement on a body, for example on a command of the control unit (reception by the actuator of a command sent by the control unit). The actuator can be of an electric, pneumatic, mechanical (for example with a spring), hydraulic type, or of another type.

### DETAILED DESCRIPTION

### Conveyor 100

Reference numeral 100 indicates a conveyor that can be used for example in the railway sector to move crushed stone, rocks, earth, bricks, rails, sleepers, construction materials and in general debris.

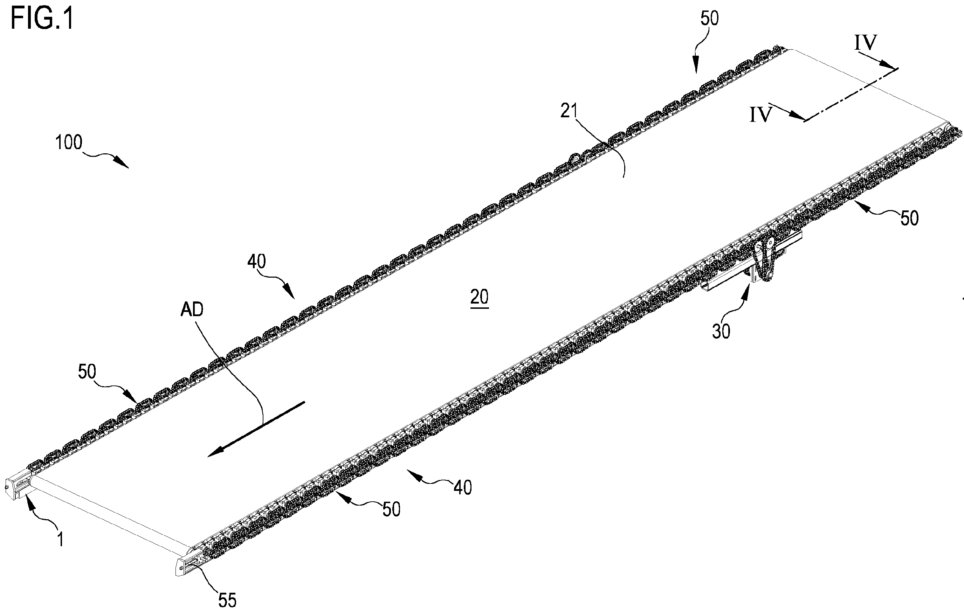

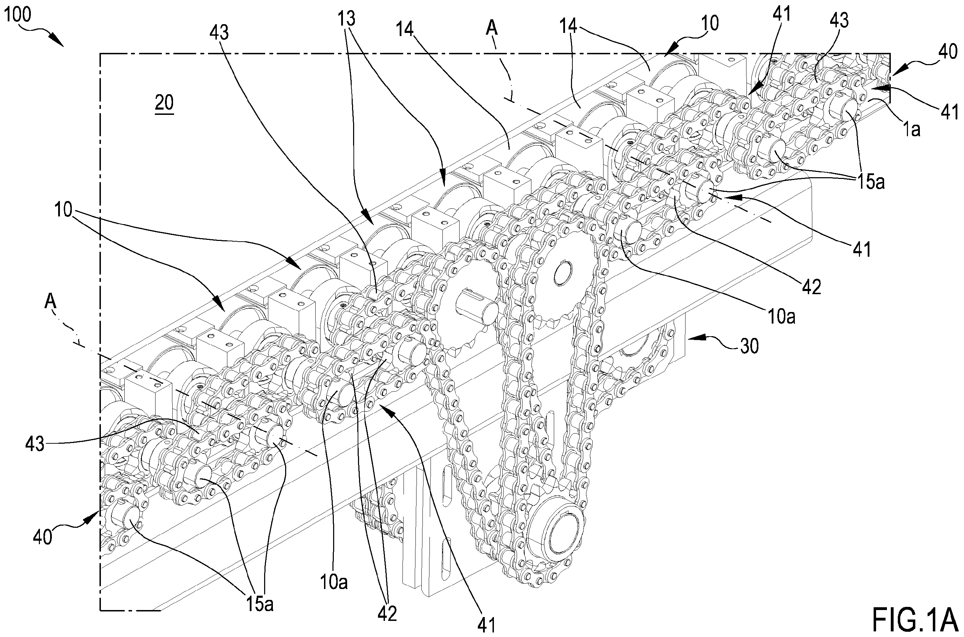

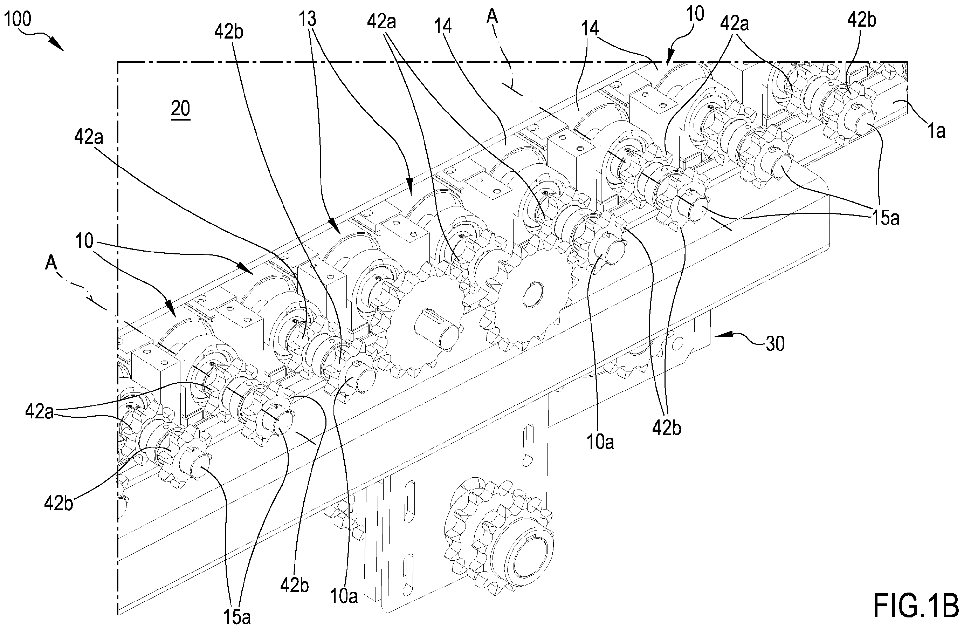

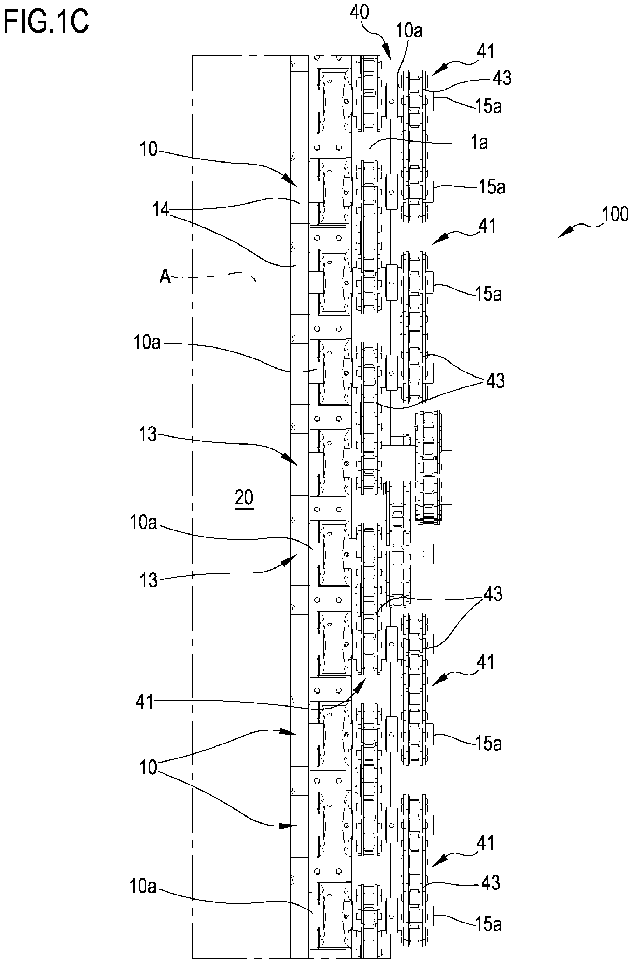

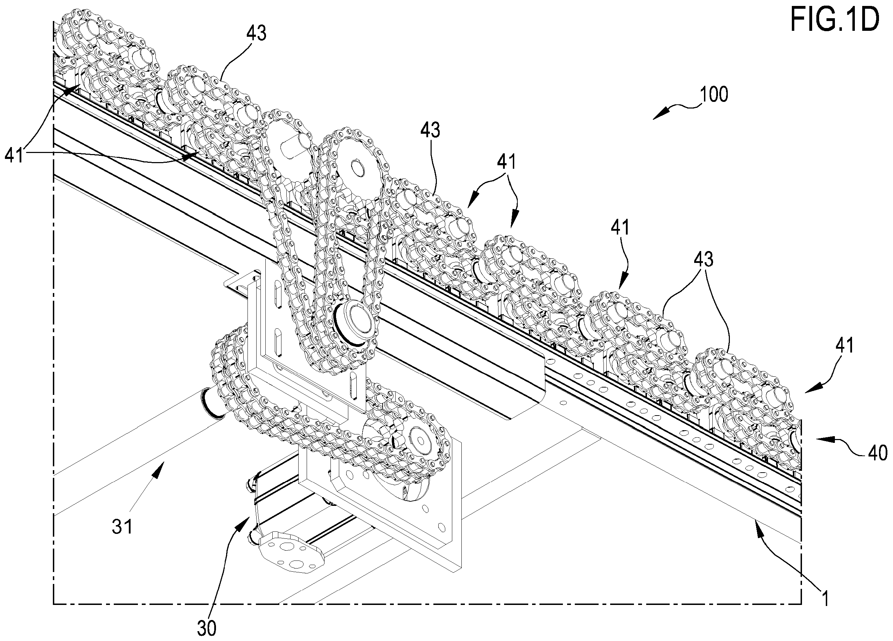

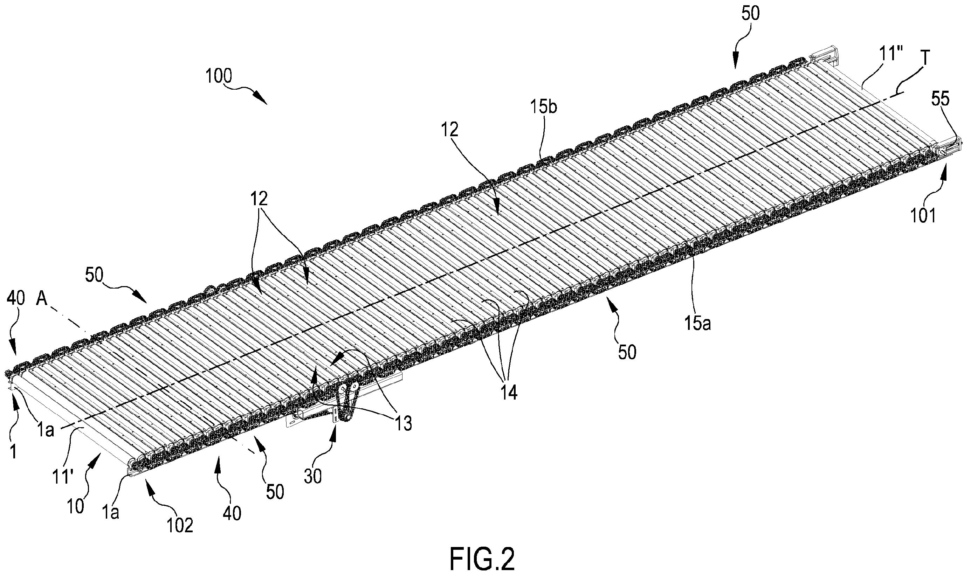

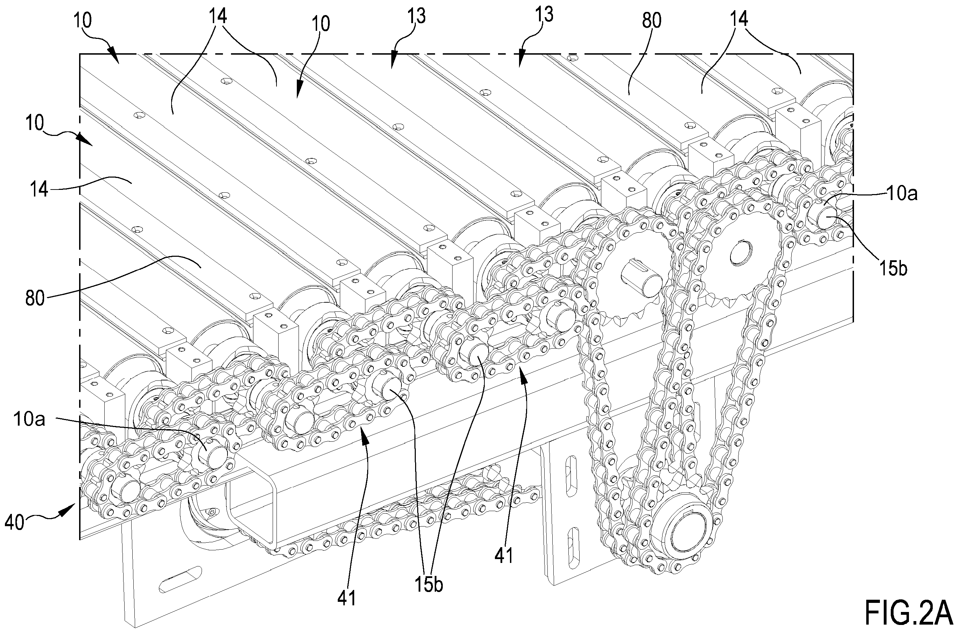

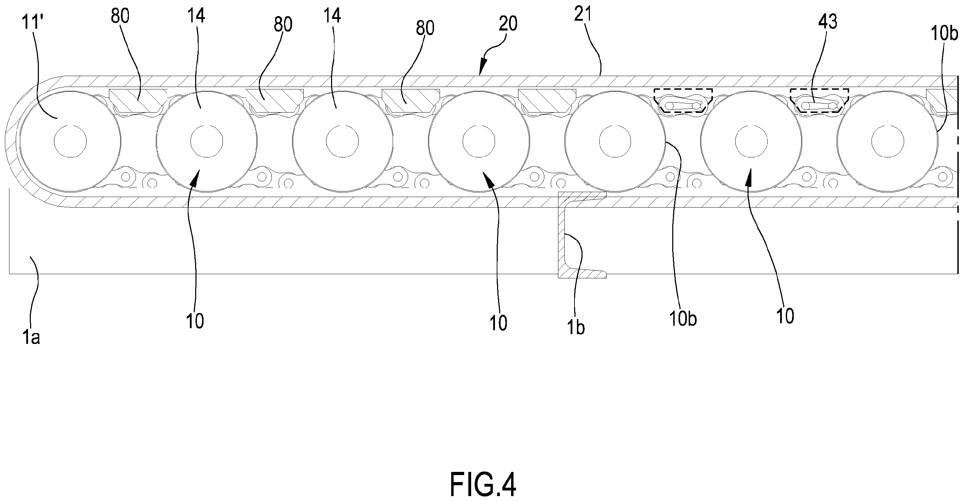

The conveyor 100 comprises a support frame 1, shown in figures 1, 2, 3 and 5, in metallic material, for example steel. The support frame 1 can comprise a pair of longitudinal bars 1a parallel to each other and extending between a first and a second end portion; the pair of longitudinal bars 1a (figures 2 to 3) essentially defines the overall length of the conveyor 100. Further bars or transverse profiles 1b of the frame 1 are arranged transversely to the longitudinal bars 1a (see for example figure 4) and constrained to them to define a load-bearing (cross-linked) structure.

The conveyor 100 comprises a plurality of rollers 10 constrained to the support frame 1 which can be made at least partially of metallic material; for example the rollers can be made essentially of steel or can be made partly of metallic material and partly of plastic (e.g. rubber). Each roller 10 of said multiplicity extends along a prevailing direction of development between a first and a second end portion 15a, 15b at which each roller 10 comprises respective supports securely fastened to the frame 1, in particular to the longitudinal bars 1a; the supports carry bearings configured to allow rotation of the respective roller around its own axis A, parallel to the prevailing direction of development of the respective roller 10.

In detail, each roller 10 comprises, at the end portions, respective engagement portions 10a (figures 1A-1C, 2A) suitable for coupling with the bearings carried by the longitudinal bars of the frame 1. In interposition, between said engagement portions, each roller 10 comprises a central support body 10b (figure 4).

Each roller 10, in particular at least the central support body 10b, has a cylindrical shape; at the central support body 10b, the roller defines its maximum diameter between 3 cm and 100 cm, optionally between 3 cm and 50 cm. The length of each roller is defined by the maximum distance between said end portions and can be between 5 cm and 400 cm, optionally between 20 cm and 350 cm.

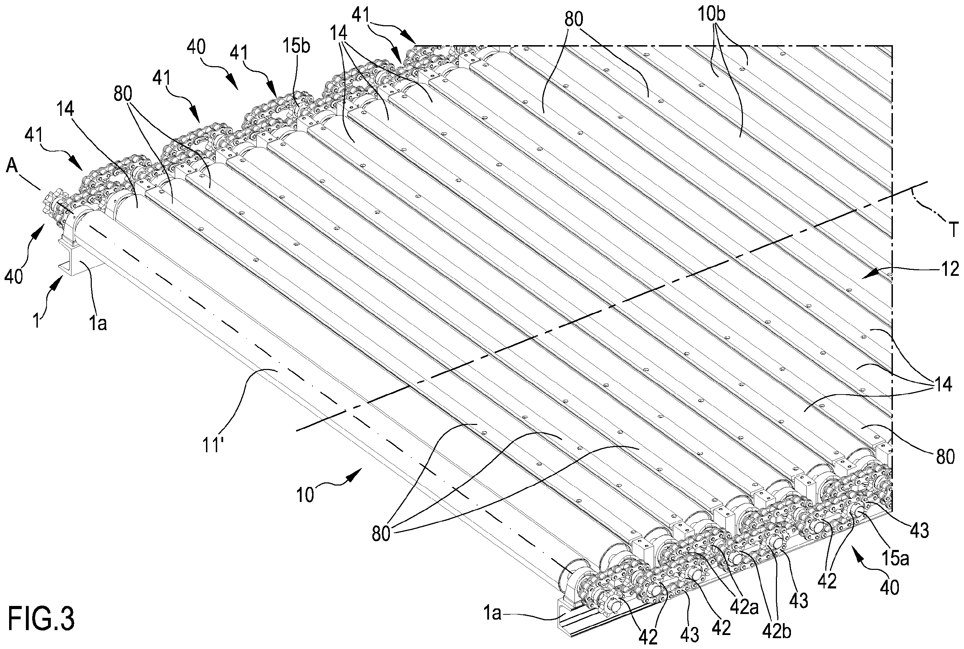

The rollers 10 of said multiplicity are placed parallel to each other and aligned along a predetermined trajectory T (see for example figures 2 and 2A) transverse to the rotation axes A: in detail, the predetermined trajectory T along which the rollers 10 are aligned is perpendicular to the rotation axes A to define a rectilinear direction lying along a loading plane (see for example figures 2, 2A and 3). In fact, the rollers 10 of said multiplicity are consecutively side by side along said trajectory T and have the rotation axes A parallel to each other; the rollers 10 of said multiplicity are uniformly distributed substantially along the entire length of the conveyor 100 as shown for example in figure 2. The rollers 10 of said multiplicity are engaged to the frame so as to substantially define the width of the conveyor 100, which, measured parallel to the rotation axis A of the rollers 10, can be between 3 cm and 400 cm.

The rollers 10 are arranged in such a way that the rotation axes have a distance from each other lower than 5 times the diameter of each roller (in particular the maximum diameter of each roller measured at the central support body 10b), optionally lower than 3 times said diameter, even more optionally between 1.25 and 2.5. The conveyor 100 has a number of rollers 10 depending on the overall length of the conveyor.

As can be seen from figure 2, the rollers 10 of said multiplicity comprise at least a first end return roller 11', at least a second end return roller 11" spaced from the first end return roller 11', and a predetermined number of intermediate rollers 12 interposed between said first and second end return rollers 11', 11". The end return rollers 11', 11" are arranged at longitudinal end portions of the conveyor 100 as shown in figure 2. The end return rollers 11', 11" and the intermediate rollers 12 have the same shape and size.

The conveyor 100 comprises at least one motor 30 (figures 1, 1A, 1B, 1D, 2) active on at least one roller 10 to define a motorized roller 13 (see for example figures 1A-1C); the motor 30 is configured to rotate the motorized roller 13 around its rotation axis A. The motor 30 can be a direct current or alternating current electric motor, or an internal combustion engine, or a hydraulic or pneumatic motor having a nominal or maximum power between 1 kW 1000 kW. The motor 30 can be directly constrained to the motorized roller 13 or it can transfer the motion to it by means of a reduction gear 31 configured to increase the delivered torque (as shown for example in figure 1D). The conveyor 100 can comprise two or more motorized rollers each driven by a respective motor 30 or by a single motor. For example, figure 1D shows a single motor 30 which is connected to the multiplicity of rollers by means of a reduction gear 31. The conveyor 100 further comprises an interconnection system 40, shown for example in figures 1-3, configured to connect at least one motorized roller 13 with one or more of the further rollers 10 to define one or more driven rollers 14: the interconnection system 40 is configured to transfer the motion from the motorized roller 13 to the driven roller 14 to rotate the latter around its own rotation axis A. As shown for example in figures 1, 1B, 1C and 2, the interconnection system 40 connects in the motion the motorized roller 13 to a plurality of driven rollers 14, and in addition places the driven rollers 14 in motion connection with each other, such that the rotation of the rollers 10, and in particular of the motorized roller 13 and of the driven rollers 14, is mutually in the same direction. In an embodiment shown in figures 1-3, the intermediate rollers 12 comprise a plurality of driven rollers 14 and one or more driving rollers 13. In addition, the first and second end return rollers 11', 11" can be driven rollers 14 or driving rollers 13.

In detail, the interconnection system 40 comprises at least one transmission member 41 (see for example figures 1A, 1C, 1D, 2A and 3) configured to connect in motion a roller 10 with at least one further roller 10 adjacent and immediately consecutive with respect to the development trajectory direction of the conveyor. In detail, the interconnection system 40 comprises a plurality of transmission members 41 each of which is configured to connect in motion a pair of rollers 10 of said multiplicity immediately consecutive to each other. Consequently, a single roller 10, interposed between a first and a second adjacent roller, is placed in motion connection to the first adjacent roller by means of a first transmission member and in motion connection by means of a respective second transmission member 41.

Each transmission member 41 can comprise two driving wheels 42 (figure 3), for example comprising a crown or a toothed wheel, each constrained and rotationally connected to two adjacent rollers which are immediately consecutive with respect to the predetermined trajectory T; in particular, each driving wheel 42 is mounted coaxially to the axis A of the respective roller 10 at an end portion. Said wheels 42 are connected to each other in motion in such a way that a rotation of one wheel, thus of a roller 10, corresponds to an equal rotation of the other wheel and therefore of the respective roller 10. Said wheels 42 are connected in motion by means of a dragging element 43 (figure 3) comprising for example a belt or a chain wound in a closed ring around said pair of wheels; in particular, a single belt or chain is wound around a pair of driving wheels 42 connecting them in rotation. Alternatively, a single chain can be connected to three or more driving wheels 42, determining their motion by rotation. In a variant, said driving wheels 42 can be connected by means of a dragging element 43 comprising an intermediate wheel comprising a crown or a toothed wheel.

A single transmission member 41 can connect two or more adjacent and immediately consecutive driven rollers 14 or a motorized roller 13 with at least one driven roller 14, in particular to synchronize rotation.

As mentioned above, a single roller 10, interposed between a first and a second roller adjacent to it, can be placed in motion connection to the first and second roller by means of a pair of transmission members 41: in this case the single roller it has an axially spaced primary driving wheel 42a and a secondary driving wheel 42b (see for example figure 1B in which the transmission members are schematically represented without a transmission element so that said driving wheels 42a and 42a are clearly visible). The primary driving wheel 42a is connected to a primary driving wheel 42a of the first roller by means of a dragging element 43, while the secondary driving wheel 42b is connected to a secondary driving wheel 42b of the second roller by means of a respective dragging element 43.

As can be seen in figures 1A-1C and 3, the plurality of transmission members 41 is arranged at the end portions 15a, 15b of the rollers 10, in particular at both end portions 15a, 15b. In detail, the conveyor 100 can comprise an interconnection system 40 active on both sides of the conveyor, i.e. at both the first and second end portions 15a of the rollers 10. These interconnection systems 40 can be connected to a single motor or they can be connected to one or more motors active on both interconnection systems 40.

The accompanying figures show an embodiment of the conveyor 100 comprising a plurality of series 50 (figure 1) of rollers 10; each series 50 comprises at least one motorized roller 13 and a plurality of driven rollers 14. The interconnection system 40 is thus configured to connect the motorized roller 13 with the plurality of driven rollers 14 of the respective series 50 in motion. In figures 1 and 2, the conveyor comprises two series 50 of rollers 10 arranged on each side of the conveyor (in total there are four series 50 of rollers 10), in which a series extends from the respective motorized roller 13 to a first end portion 101 of the conveyor 100, while the other series 50 of rollers 10 extends from a further motorized roller 13 to a second end portion 102 of the conveyor 100 (figure 2). Alternatively, the conveyor 100 can have a single motorized roller 13 (a single motor) in common with the two series of rollers 10 and configured to drag the plurality of driven rollers 14 of both series in rotation; in this configuration, the motorized roller 13 is an intermediate roller 12 arranged at a central portion of the support frame 1, in interposition between the return rollers. In the latter embodiment described, the single motor 30 is connected to each of the two distinct motorized rollers 13 of the series 50 of rollers by means of a dragging element comprising at least one of: a chain, a belt, a crown, a toothed wheel. Said dragging element is configured to transfer, during an operating condition of the conveyor 100, the motion to the respective series 50 of rollers 10: in this way, the dragging effort deriving from the motion of the series of rollers is distributed over each of the series present. According to the embodiment shown in figures 1 and 2, the conveyor 100 can comprise a single motor 30 for each interconnection system 40 placed laterally to the conveyor 100.

The conveyor 100 further comprises a belt 20 wound in a closed ring between the first and second end return rollers 11', 11" as shown in figure 1 and in the section view of figure 4. The belt 20 defines an operating tract 21 configured to receive the inert material and rest on the rollers 10. The belt 20 can be made of plastic material, for example rubber. In detail, the belt is configured to come into contact exclusively with the central support body 10b of each individual roller 10 and therefore has a width substantially equal to the length of said central body 10b of the rollers; in detail, the belt 20 has a width, measured parallel to the axis A of the rollers 10, between 3 cm and 400 cm.

It is worth noting that the belt 20 is distinct from the multiplicity of rollers and is configured to move relatively with respect to the latter. In detail, the belt 20 is configured to be moved by the plurality of rollers 10: the belt is in turn configured to move the inert material resting on said belt 20 along a predetermined advancement direction AD (figure 1). In greater detail, the belt 20 is configured to be moved exclusively by a friction action, optionally rolling friction, defined by the contact between the multiplicity of rollers 10 and the belt 20 itself; the contact occurs between an inner surface of an upper portion of the belt 20 and the lateral surface of the rollers 10 themselves, at least during an operating condition of the conveyor, during which the inert material is resting on the belt. It is worth noting that the weight of the inert material placed on the belt pushes the latter against the multiplicity of rollers, thus ensuring an efficient contact between the rollers and the belt so that the latter can be correctly moved. In other words, the contact between the plurality of rollers 10 and the belt 20 therefore determines a mutual coupling by friction such that a rotation of the rollers 10 helps to determine the motion of the belt 20. This frictional coupling allows transmitting an increasing driving force if inert material is arranged on the belt, in particular a driving force proportional to the weight of the inert material bearing on the operating tract of the belt 20 itself. The advancement direction AD of the inert material is substantially perpendicular to the rotation axes A of the rollers 10 and parallel to the predetermined trajectory along which the latter are aligned. In particular, the advancement direction AD is parallel to the rectilinear direction along which the rollers 10 are aligned.

Although the belt 20 is in contact with the plurality of rollers 10, the rollers 10 and the interconnection system 40 are distinct from the belt 20.

The load of the material disposed, at least during an operating condition of the conveyor 100, on the upper portion of the belt 20 is supported by the rollers 10 arranged below the belt 20. In addition, the conveyor 100 can comprise a plurality of support bars 80 interposed between pairs of rollers 10 immediately adjacent and extending in length substantially parallel to the axes A of the rollers 10 (see figures 2A, 3 and 4). In particular, the support bars 80 are arranged at interspaces defined between adjacent rollers 10 and have an extension in length substantially equal to the length of the rollers 10, and an extension in height such as not to emerge beyond the support plane defined by the rollers 10. The support bars 80, shown in figure 3, are therefore configured to homogeneously support the operating tract 21 of the belt 20. The support bars 80 are made of metallic material, for example steel, or of plastic or composite material.

The conveyor 100 can further comprise a tensioning system 55 of the belt 20, the latter stretched between the first end return roller 11' and the second end return roller 11", configured to determine a predefined value of tension on the belt itself. The tensioning system 55 provides that at least one of the first and second end return rollers 11', 11" is movable relative to the support frame 1 to allow adjustment of the tension of the belt 20. According to an embodiment shown in figures 1 and 2, the first and second end return rollers 11', 11" are movable with respect to each other, moving away and approaching in a direction substantially parallel to the loading surface.

Further, the conveyor 100 can comprise a user interface and a control unit connected to each other and configured to activate the motor 30 in order to determine the motion of the belt 20.

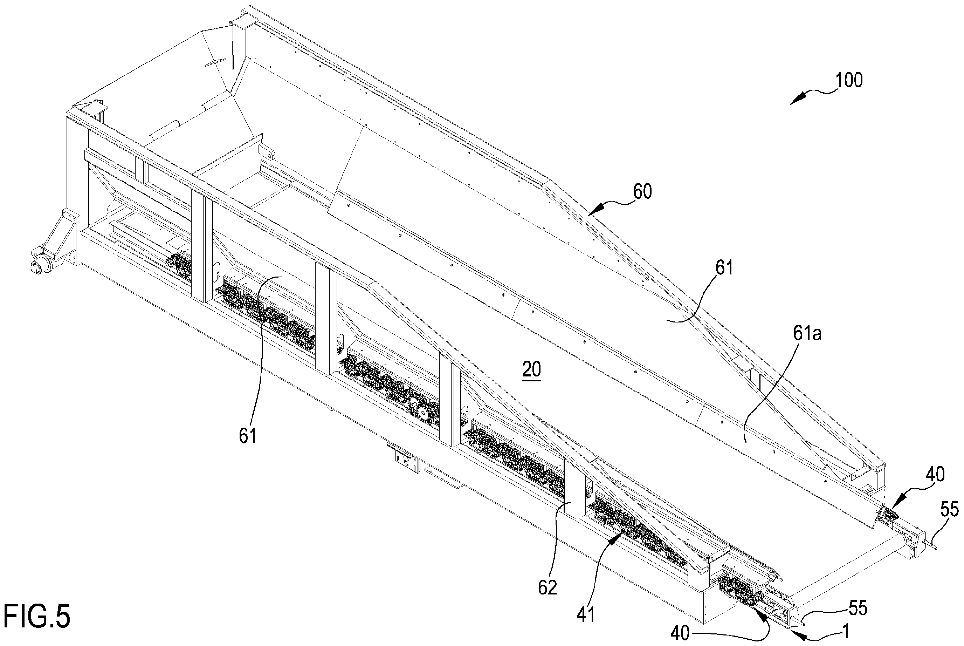

The conveyor 100 can further comprise a containment structure 60 shown in figure 5 comprising a bearing structure 62 made of metallic material, for example steel, or alternatively of plastic or composite material. The containment structure 60 further comprises lateral bulkheads 61 constrained and supported by the bearing structure 62 and arranged at lateral portions of the belt 20, wherein the lateral bulkheads 61 extending in height above the operating tract 21: the lateral bulkheads 61 are configured to keep the inert material, at least during an operating condition of the conveyor, above the belt 20 during the movement of the material itself. The lateral bulkheads 61 extend in length substantially parallel to the predefined trajectory along which the rollers 10 are aligned: in particular the lateral bulkheads 61 are parallel to the linear direction along which the rollers 10 are aligned, and perpendicular to the rotation axis A of the rollers.

The lateral bulkheads 61 have an end portion 61a placed in contact with or in the proximity of lateral portions of the belt 20: the end portion 61a is configured to prevent the inert material from interfering with the transmission members 41 arranged laterally to the belt 20. In other words, the lateral walls 61 of the containment structure 60 allow stemming the inert material to keep it on the operating tract 21 of the belt and determine the displacement thereof. The conveyor 100 can also have an upper cover defining, in combination with the containment structure 60 and with the belt 20, an internal volume configured to house the inert material and prevent the escape of material or dust, especially during the movement of the belt 20. The upper cover can be made of metallic material, for example steel, or in plastic or composite material. The upper cover can also be made of transparent material to allow an external subject to view the internal volume.

### Railway wagon

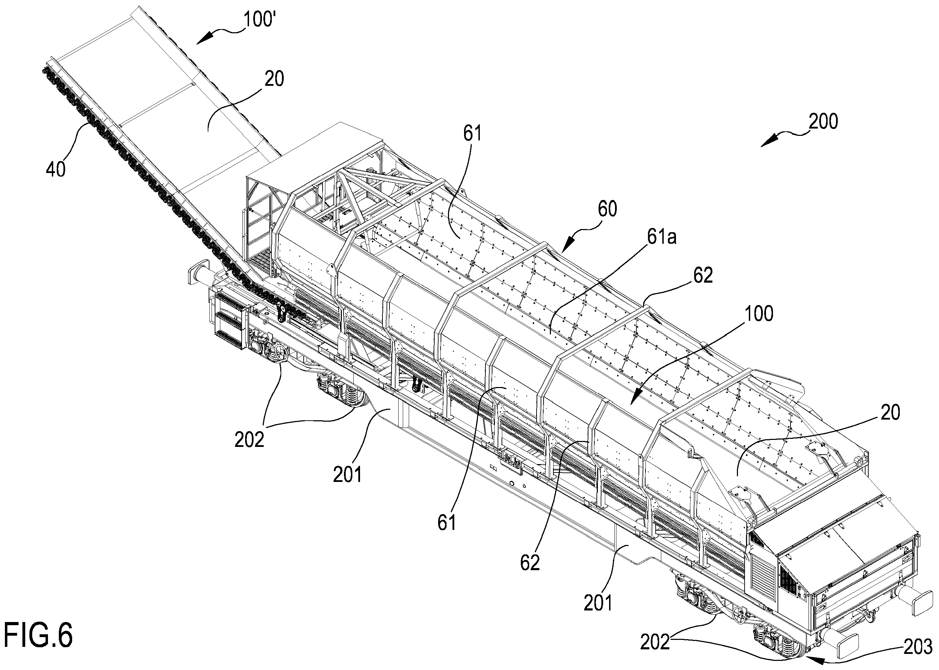

Furthermore, the object of the present invention is a railway wagon 200 (figure 6) comprising a base structure 201 comprising a support platform 202 to which at least two carriages 203 are configured to support the platform 202 and allow the support/sliding of the base structure on the rails. Each carriage 203 comprises at least one axle at the ends of which two wheels or rims are constrained; in detail, the carriage comprises the wheel arrangement or the set of members included between the rails and the suspension of the carriage itself, that is: wheels, rims, axles, bushings, bearings. Optionally, the carriage can be provided with traction motors to define a driving carriage.

The carriage 200 comprises at least one conveyor 100 of the type described above and according to one or more of the appended claims. The conveyor 100 is engaged above the support platform 202: in particular, the bearing structure 62 is constrained to the support platform 202 of the frame 201 of the railway carriage 200. The conveyor can advantageously be engaged to the base structure 201 of the carriage 200 by means of a known Twist-Lock system. The railway wagon 200 can use the conveyor 100 for the distribution of inert material, in particular for the unloading of crushed stone on the railway ballast. Similarly, the conveyor 100 mounted on a railway wagon 200 can be configured to receive inert material, coming for example from excavations and demolitions, on the operating tract 21 of the belt 20 and possibly be moved to a container arranged on a further railway wagon.

The support frame 1 of the conveyor 100 can be movable with respect to the railway wagon so as to determine an inclination of the loading surface of the conveyor so that the material can be moved, unloaded or loaded at different heights.

The railway wagon 200 can further comprise a conveyor 100 and an additional conveyor 100' (see for example figure 6), arranged one after the other, for example along the same predefined trajectory along which the rollers 10 are arranged as shown in figure 6. The additional conveyor 100' is arranged at an end portion of the railway wagon 200 and can be inclined so as to allow the inert material to be moved from the conveyor 100 to an elevated area, for example if it is necessary to unload the material inside a high-height container.

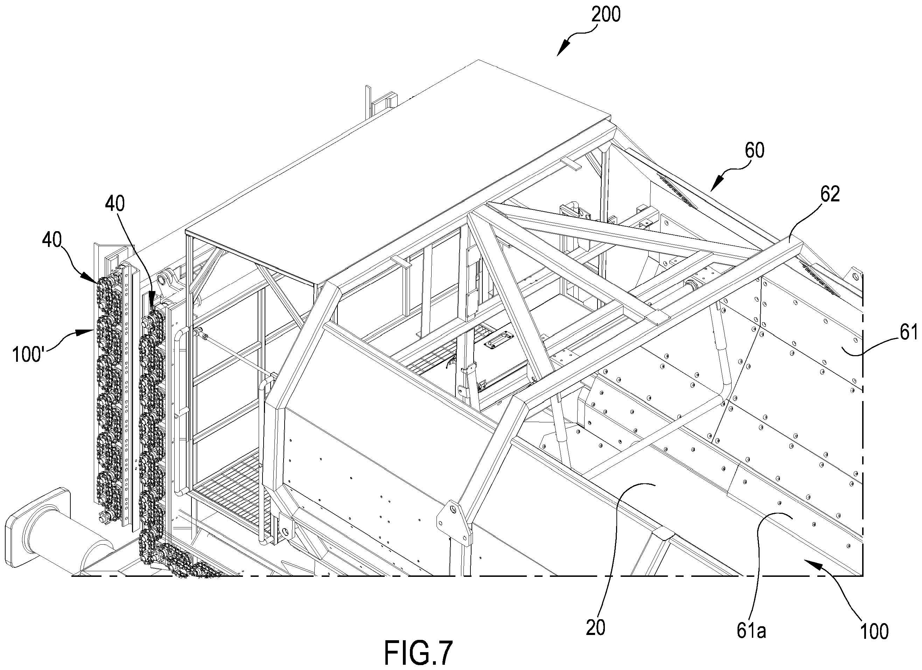

The additional conveyor 100', according to an embodiment shown in figure 7, is retractable and foldable: in particular the additional conveyor 100' can be movable between an extended condition, shown in figure 6, in which the conveyor is configured to accommodate and move the inert material, and a contracted condition, in which the conveyor is folded in layers in order to reduce its extension and consequently the space occupied, for example during the movement of the railway wagon.

### ADVANTAGES OF THE INVENTION

The present invention entails, compared to the solutions of the prior art, considerable advantages. In fact, the presence of an interconnection system (40) separate from the belt (20) allows efficiently moving the multiplicity of rollers so that they can in turn effectively move the belt. In fact, thanks to the presence of the interconnection system, distinct from the belt, it is possible to rotate the multiplicity of rollers in a synchronized and equivocal manner so that the rollers can act, essentially as motorized, on the belt. In fact, thanks to the interconnection system according to the present invention, the rollers of said multiplicity actively cooperate in the movement of the belt avoiding defining passive elements, therefore resistant to the movement of the belt.

## Claims

1. Railway wagon (200) comprising:
- a base structure (201) having:
o at least one support platform (202),
o at least two carriages (203) configured to support the support platform (202) and allow movement of the base structure (201) along rails;
- at least one conveyor (100) carried by the support platform (202), said conveyor (100) comprising:
o a support frame (1),
o a multiplicity of rollers (10), constrained to the support frame (1), each movable by rotation about its own axis of rotation (A), said rollers being aligned along a predetermined trajectory transverse to the rotation axes (A) of the multiplicity of rollers (10), the multiplicity of rollers (10) comprising:
• at least one first end return roller (11'),
• at least one second end return roller (11") spaced from the first end roller (11'),
• a predetermined number of intermediate rollers (12) interposed between said first and second end return rollers (11', 11"),
o at least one belt (20) wound in a closed loop between the first and the second end return roller (11', 11"), said belt (20) comprising an operative tract (21) configured to receive a predetermined amount of material, for example inert material, and rest on one or more rollers (10) of said multiplicity,
o at least one motor (30) active on at least one of said multiplicity of rollers (10) to define a motorized roller (13), said motor (30) being configured to rotate said motorized roller (13) about its rotation axis (A),
**characterized by** the fact that the conveyor (100) comprises at least one interconnection system (40) distinct from the belt (20), configured to connect the motorized roller (13) with at least one further roller (10) of said multiplicity to define a driven roller (14), said interconnection system (40) being configured to transfer the motion from the motorized roller (13) to the driven roller (14) to rotate the latter about its own axis.

2. Wagon according to claim 1, wherein the belt (20) is configured to be moved by one or more of said multiplicity of rollers (10) and for transporting said predetermined amount of material, optionally inert material, along an advancement direction, optionally the belt (20) is moved by at least one motorized roller (13) and at least one driven roller (14).

3. Wagon according to any one of the preceding claims, wherein the belt (20) is configured to be moved exclusively by friction, optionally rolling friction, by said multiplicity of rollers (10).

4. Wagon according to any one of the preceding claims, wherein the interconnection system (40) is configured to connect in motion the motorized roller (13) with a plurality of driven rollers (14), wherein the interconnection system (40) is configured to transfer the rotating motion from the motorized roller (13) to the plurality of driven rollers (14).

5. Wagon according to any one of the preceding claims, wherein the interconnection system (40) comprises at least one transmission member (41) configured to connect in motion a roller (10) with at least one further roller (10) of said multiplicity,
optionally the conveyor comprises a plurality of said transmission members (41) each of which is configured to connect in motion a pair of consecutive rollers (10).

6. Wagon according to the preceding claim, wherein each transmission member (41) comprises:
- at least two driving wheels (42) each coupled to a respective roller (10) and integral in rotation thereto, optionally integral with a driven roller (14) or motorized roller (13); and
- at least one dragging element (43) configured to connect in the motion, in the rotation said at least two driving wheels (42) and consequently to connect in the motion the rollers coupled to said driving wheels (42), optionally said dragging element (43) is configured for connecting in rotation two driving wheels (42) carried by two rollers (10) immediately consecutive to each other along said predetermined trajectory.

7. Wagon according to the preceding claim, wherein each of said driving wheels (42) of the transmission member (41) comprises a toothed wheel or a crown,
wherein the dragging element (43) comprises:
- a belt or a chain wound in a closed loop around at least two driving wheels (42) carried by two respective rollers immediately consecutive to each other with respect to said predetermined trajectory, said at least one belt or chain being configured to connect in rotation said driving wheels around which it is wound; or
- at least one intermediate transfer wheel comprising a toothed wheel or a crown in engagement with said driving wheels (42), carried by two respective rollers immediately consecutive to each other with respect to said predetermined path, and configured for connecting the latter in rotation.

8. Wagon according to any one of the claims from 5 to 7, wherein each of the rollers (10) of said multiplicity extends in length between a first and a second end portions (15a, 15b), the at least one transmission member (41) being disposed in correspondence of at least one of said first and second end portions (15a, 15b), optionally a transmission member (41) is arranged at each of said first and second end portions (15a, 15b).

9. Wagon according to the preceding claim, wherein a first plurality of transmission members (41) is arranged at the first end portion (15a) of the multiplicity of rollers and a corresponding second plurality of transmission members (41) is arranged at the second end portion (15b) of the same multiplicity of rollers, namely in opposition to the first plurality of transmission members with respect to the rollers themselves.

10. Wagon according to any one of the claims from 6 to 9, wherein each roller (10) of said multiplicity comprises, in correspondence of at least one of the first and a second end portions (15a, 15b), at least one main driving wheel (42a) and at least one auxiliary driving wheel (42b) distinct and axially spaced from said main driving wheel (42a),
wherein the main driving wheel (42a) of a first roller (10) is connected by means of a dragging element (43) to a driving wheel (42) of a second roller (10) adjacent and immediately consecutive to the first roller along said predetermined trajectory,
and wherein the auxiliary driving wheel (42b) of said first roller (10) is connected by means of a dragging element (43) to a driving wheel (42) of a third roller (10) adjacent and immediately consecutive to the first roller along said predetermined trajectory,
wherein said first roller is interposed between said second and third roller of said multiplicity with respect to said predetermined alignment trajectory of said rollers.

11. Wagon according to any one of the preceding claims, wherein the rollers (10) of said multiplicity have a cylindrical shape having a predetermined diameter, the rotation axes (A) of said rollers being spaced apart from each other by a value lower than 5 times said diameter, optionally lower than 3 times the diameter, even more optionally between 1.25 and 2.5 times.

12. Wagon according to any one of the preceding claims, wherein each roller (10) of said multiplicity comprises:
- respective engagement portions (10a) placed at the first and second end portions (15a, 15b) and configured to constrain the frame (1) of the conveyor,
- a central support body (10b) placed in interposition, optionally in connection, with said engagement portions (10a),
wherein said central support body (10b), optionally exclusively said central support body (10b), is configured to receive in support the belt (20).

13. Wagon according to the preceding claim, wherein the interconnection system (40), optionally the transmission members (41), is placed beside the central support body (10b) of the rollers of the multiplicity of rollers, in particular the interconnection system (40), optionally the transmission members (41), is arranged on the side of the engagement portion (10a) of the multiplicity of rollers on the opposite side with respect to the central support body (10b) of said multiplicity of rollers.

14. Wagon according to claim 12 or 13 when claim 12 depends on claim 10 or 11, wherein each roller of said multiplicity of rollers comprises at least one main driving wheel (42a) and at least one auxiliary driving wheel (42b) which are placed at the side of the central support body (10b).

15. Wagon according to any one of the preceding claims, wherein the conveyor comprises a containment structure (60) having:
- a bearing structure (62),
- lateral bulkheads (61) constrained and supported by the bearing structure (62) and arranged at lateral portions of the belt (20), wherein the lateral bulkheads (61) extend in height above the operating tract (21) of the belt (20) for containing the material moving on the belt.

## Patentansprüche

1. Schienenwaggon (200), umfassend:
- eine Basisstruktur (201), aufweisend:
o wenigstens eine Halterungsplattform (202),
o wenigstens zwei Wagen (203), welche dazu eingerichtet sind, die Halterungsplattform (202) zu haltern und eine Bewegung der Basisstruktur (201) entlang von Schienen zu erlauben;
- wenigstens eine Fördereinrichtung (100), welche durch die Halterungsplattform (202) getragen ist, wobei die Fördereinrichtung (100) umfasst:
o einen Halterungsrahmen (1),
o eine Mehrzahl von Rollen (10), welche, jeweils durch eine Rotation um ihre eigene Drehachse (A) rotierbar, mit dem Halterungsrahmen (1) in Zwangsverbindung gebracht sind, wobei die Rollen entlang einer vorbestimmten Trajektorie transversal zu der Rotationsachse (A) der Mehrzahl von Rollen (10) ausgerichtet sind, wobei die Mehrzahl von Rollen (10) umfasst:
• wenigstens eine erste Endumlenkrolle (11'),
• wenigstens eine zweite Endumlenkrolle (11"), welche von der ersten Endumlenkrolle (11') beabstandet ist,
• eine vorbestimmte Anzahl von Zwischenrollen (12), welche zwischen der ersten und der zweiten Endumlenkrolle (11', 11") eingefügt sind,
o wenigstens einen Riemen (20), welcher in einer geschlossenen Schleife zwischen der ersten und der zweiten Endumlenkrolle (11', 11") gewickelt ist, wobei der Riemen (20) einen Arbeitstrakt (21) umfasst, welcher dazu eingerichtet ist, eine vorbestimmte Menge eines Materials, beispielsweise eines inerten Materials, aufzunehmen, und auf einer oder mehreren Rollen (10) der Mehrzahl aufzuliegen,
o wenigstens einen Motor (30), welcher an wenigstens einer der Mehrzahl von Rollen (10) aktiv ist, um eine motorisierte Rolle (13) zu definieren, wobei der Motor (30) dazu eingerichtet ist, die motorisierte Rolle (13) um ihre Rotationsachse (A) zu rotieren,
**gekennzeichnet durch** die Tatsache, dass die Fördereinrichtung (100) wenigstens ein von dem Riemen (20) verschiedenes Zwischenverbindungssystem (40) umfasst, welches dazu eingerichtet ist, die motorisierte Rolle (13) mit wenigstens einer weiteren Rolle (10) der Mehrzahl zu verbinden, um eine angetriebene Rolle (14) zu definieren, wobei das Zwischenverbindungssystem (40) dazu eingerichtet ist, die Bewegung von der motorisierten Rolle (13) auf die angetriebene Rolle (14) zu übertragen, um die letztere um ihre eigene Achse zu rotieren.

2. Waggon nach Anspruch 1, wobei der Riemen (20) dazu eingerichtet ist, durch eine oder mehrere der Mehrzahl von Rollen (10) bewegt zu werden, und um die vorbestimmte Menge eines Materials, optional eines inerten Materials, entlang einer Förderrichtung zu transportieren, wobei der Riemen (20) optional durch wenigstens eine motorisierte Rolle (13) und wenigstens eine angetriebene Rolle (14) bewegt wird.

3. Waggon nach einem der vorhergehenden Ansprüche, wobei der Riemen (20) dazu eingerichtet ist, ausschließlich durch Reibung, optional Rollreibung, durch die Mehrzahl von Rollen (10) bewegt zu werden.

4. Waggon nach einem der vorhergehenden Ansprüche, wobei das Zwischenverbindungssystem (40) dazu eingerichtet ist, die motorisierte Rolle (13) mit einer Mehrzahl angetriebener Rollen (14) in Bewegung zu verbinden, wobei das Zwischenverbindungssystem (40) dazu eingerichtet ist, die rotierende Bewegung von der motorisierten Rolle (13) auf die Mehrzahl angetriebener Rollen (14) zu übertragen.

5. Waggon nach einem der vorhergehenden Ansprüche, wobei das Zwischenverbindungssystem (40) wenigstens ein Übertragungselement (41) umfasst, welches dazu eingerichtet ist, eine Rolle (10) mit wenigstens einer weiteren Rolle (10) der Mehrzahl in Bewegung zu verbinden,
wobei optional die Fördereinrichtung eine Mehrzahl der Übertragungselemente (41) umfasst, von welchen jedes dazu eingerichtet ist, ein Paar aufeinanderfolgender Rollen (10) in Bewegung zu verbinden.

6. Waggon nach dem vorhergehenden Anspruch, wobei jedes Übertragungselement (41) umfasst:
- wenigstens zwei Antriebsräder (42), welche jeweils mit einer entsprechenden Rolle (10) gekoppelt und integral in Rotation damit sind, optional integral mit einer angetriebenen Rolle (14) oder einer motorisierten Rolle (13) sind; und
- wenigstens ein Mitnahmeelement (43), welches dazu eingerichtet ist, in der Bewegung die wenigstens zwei Antriebsräder (42) in der Rotation zu verbinden, und folglich die mit den Antriebsrädern (42) gekoppelten Rollen in der Bewegung zu verbinden, wobei optional das Mitnahmeelement (43) dazu eingerichtet ist, zwei Antriebsräder (42) in Rotation zu verbinden, welche durch zwei Rollen (10) getragen sind, welche entlang der vorbestimmten Trajektorie unmittelbar aufeinander folgen.

7. Waggon nach dem vorhergehenden Anspruch, wobei jedes der Antriebsräder (42) des Übertragungselements (41) ein Zahnrad oder einen Kranz umfasst,
wobei das Mitnahmeelement (43) umfasst:
- einen Riemen oder eine Kette, welcher/welche in einer geschlossenen Schlaufe um wenigstens zwei Antriebsräder (42) gewickelt ist, welche durch zwei entsprechende Rollen getragen sind, welche entlang der vorbestimmten Trajektorie unmittelbar aufeinander folgen, wobei der wenigstens eine Riemen oder die wenigstens eine Kette dazu eingerichtet ist, die Antriebsräder in Rotation zu verbinden, um welche er/sie gewickelt ist; oder
- wenigstens ein Zwischenübertragungsrad, welches ein Zahnrad oder einen Kranz in Eingriff mit den Antriebsrädern (42) umfasst, welche durch zwei entsprechende Rollen getragen sind, welche entlang des vorbestimmten Pfades unmittelbar aufeinander folgen, und dazu eingerichtet ist, die letzteren in Rotation zu verbinden.

8. Waggon nach einem der Ansprüche von 5 bis 7, wobei sich jede der Rollen (10) der Mehrzahl bezüglich einer Länge zwischen einem ersten und einem zweiten Endabschnitt (15a, 15b) erstreckt, wobei das wenigstens eine Übertragungselement (41) in Übereinstimmung wenigstens eines aus dem ersten und dem zweiten Endabschnitt (15a, 15b) angeordnet ist, wobei optional an jedem aus dem ersten und dem zweiten Endabschnitt (15a, 15b) ein Übertragungselement (41) angeordnet ist.

9. Waggon nach dem vorhergehenden Anspruch, wobei eine erste Mehrzahl von Übertragungselementen (41) an dem ersten Endabschnitt (15a) der Mehrzahl von Rollen angeordnet ist und eine entsprechende zweite Mehrzahl von Übertragungselementen (41) an dem zweiten Endschnitt (15b) der gleichen Mehrzahl von Rollen angeordnet ist, nämlich in Bezug auf die Rollen selbst entgegengesetzt zu der ersten Mehrzahl von Übertragungselementen.

10. Waggon nach einem der Ansprüche von 6 bis 9, wobei jede Rolle (10) der Mehrzahl, in Übereinstimmung wenigstens eines aus dem ersten und einem zweiten Endabschnitt (15a, 15b), wenigstens ein Hauptantriebsrad (42a) und wenigstens ein Hilfsantriebsrad (42b) umfasst, welches von dem Hauptantriebsrad (42a) verschieden und axial beabstandet ist,
wobei das Hauptantriebsrad (42a) einer ersten Rolle (10) mittels eines Mitnahmeelements (43) mit einem Antriebsrad (42) einer zweiten Rolle (10) verbunden ist, welche der ersten Rolle benachbart ist und entlang der vorbestimmten Trajektorie unmittelbar auf diese folgt,
und wobei das Hilfsantriebsrad (42b) der ersten Rolle (10) mittels eines Mitnahmeelements (43) mit einem Antriebsrad (42) einer dritten Rolle (10) verbunden ist, welche der ersten Rolle benachbart ist und entlang der vorbestimmten Trajektorie unmittelbar auf diese folgt,
wobei die erste Rolle in Bezug auf die vorbestimmte Ausrichtungstrajektorie der Rollen zwischen der zweiten und der dritten Rolle der Mehrzahl eingefügt ist.

11. Waggon nach einem der vorhergehenden Ansprüche, wobei die Rollen (10) der Mehrzahl eine zylindrische Form mit einem vorbestimmten Durchmesser aufweisen, wobei die Rotationsachsen (A) der Rollen voneinander um einen Wert beabstandet sind, welcher weniger als das 5-fache des Durchmessers, optional weniger als das 3-fache des Durchmessers, noch weiter optional zwischen dem 1,25-Fachen und dem 2,5-Fachen, beträgt.

12. Waggon nach einem der vorhergehenden Ansprüche, wobei jede Rolle (10) der Mehrzahl umfasst:
- entsprechende Eingriffsabschnitte (10a), welche an dem ersten und dem zweiten Endabschnitt (15a, 15b) platziert sind und dazu eingerichtet sind, den Rahmen (1) der Fördereinrichtung in Zwangsverbindung zu bringen,
- einen zentralen Halterungskörper (10b), welcher in Zwischenschaltung, optional in Verbindung, mit den Eingriffsabschnitten (10a) platziert ist,
wobei der zentrale Halterungskörper (10b), optional ausschließlich der zentrale Halterungskörper (10b), dazu eingerichtet ist, den Riemen (20) in Halterung aufzunehmen.

13. Waggon nach dem vorhergehenden Anspruch, wobei das Zwischenverbindungssystem (40), optional die Übertragungselemente (41), neben dem zentralen Halterungskörper (10b) der Rollen der Mehrzahl von Rollen platziert ist, wobei insbesondere das Zwischenverbindungssystem (40), optional die Übertragungselemente (41), an der Seite des Eingriffsabschnitts (10a) der Mehrzahl von Rollen an der in Bezug auf den zentralen Halterungskörper (10b) der Mehrzahl von Rollen entgegengesetzten Seite angeordnet ist.

14. Waggon nach Anspruch 12 oder 13, wenn Anspruch 12 von Anspruch 10 oder 11 abhängt, wobei jede Rolle der Mehrzahl von Rollen wenigstens ein Hauptantriebsrad (42a) und wenigstens ein Hilfsantriebsrad (42b) umfasst, welche an der Seite des zentralen Halterungskörpers (10b) platziert sind.

15. Waggon nach einem der vorhergehenden Ansprüche, wobei die Fördereinrichtung eine Behälterstruktur (60) umfasst, welche folgendes aufweist:
- eine Tragstruktur (62),
- laterale Trennwände (61), welche durch die Tragstruktur (62) in Zwangsverbindung gebracht und gehaltert sind und an lateralen Abschnitten des Riemens (20) angeordnet sind, wobei sich die lateralen Trennwände (61) bezüglich einer Höhe oberhalb des Arbeitstrakts (21) des Riemens (20) erstrecken, um das Material zu enthalten, welches sich auf dem Riemen bewegt.

## Revendications

1. Wagon ferroviaire (200) comprenant:
- une structure de base (201) ayant:
o au moins une plateforme de support (202),
o au moins deux chariots (203) conçus pour supporter la plateforme de support (202) et pour permettre le mouvement de la structure de base (201) le long des rails;
- au moins un transporteur (100) porté par la plateforme de support (202), ledit transporteur (100) comprenant:
o un châssis de support (1),
o une multiplicité de rouleaux (10), contraints au châssis de support (1), chacun mobile par rotation autour de son propre axe de rotation (A), lesdits rouleaux étant alignés le long d'une trajectoire prédéterminée transversale aux axes de rotation (A) de la multiplicité des rouleaux (10), la multiplicité des rouleaux (10) comprenant:
• au moins un premier rouleau de retour d'extrémité (11'),
• au moins un second rouleau de retour d'extrémité (11") espacé du premier rouleau d'extrémité (11'),
• un nombre prédéterminé de rouleaux intermédiaires (12) interposés entre ledit premier et ledit second rouleau de retour d'extrémité (11', 11"),
o au moins une bande transporteuse (20) enroulée en une boucle fermée entre le premier et le second rouleau de retour d'extrémité (11', 11"), ladite bande transporteuse (20) comprenant une étendue fonctionnelle (21) conçue pour recevoir une quantité prédéterminée de matériau, par exemple de matériau inerte, et le reste sur un ou plusieurs rouleaux (10) de ladite multiplicité,
o au moins un moteur (30) actif sur au moins l'un de ladite multiplicité de rouleaux (10) pour définir un rouleau motorisé (13), ledit moteur (30) étant conçu pour faire tourner ledit rouleau motorisé (13) autour de son axe de rotation (A),
**caractérisé par le fait que** le transporteur (100) comprend au moins un système d'interconnexion (40) distinct de la bande transporteuse (20), conçu pour relier le rouleau motorisé (13) à au moins un rouleau supplémentaire (10) de ladite multiplicité pour définir un rouleau entraîné (14), ledit système d'interconnexion (40) étant conçu pour transférer le mouvement du rouleau motorisé (13) au rouleau entraîné (14) pour faire tourner ce dernier autour de son axe.

2. Wagon selon la revendication 1, la bande transporteuse (20) étant conçue pour être déplacée par l'un ou plusieurs de ladite multiplicité de rouleaux (10) et pour transporter ladite quantité prédéterminée de matériau, éventuellement de matériau inerte, le long d'un sens de progression, éventuellement la bande transporteuse (20) étant déplacée par au moins un rouleau motorisé (13) et au moins un rouleau entraîné (14).

3. Wagon selon l'une quelconque des revendications précédentes, la bande transporteuse (20) étant conçue pour être déplacée exclusivement par friction, éventuellement friction par roulement, par ladite multiplicité de rouleaux (10).

4. Wagon selon l'une quelconque des revendications précédentes, le système d'interconnexion (40) étant conçu pour relier en mouvement le rouleau motorisé (13) à une pluralité de rouleaux entraînés (14), le système d'interconnexion (40) étant conçu pour transférer le mouvement de rotation depuis le rouleau motorisé (13) vers la pluralité des rouleaux entraînés (14).

5. Wagon selon l'une quelconque des revendications précédentes, le système d'interconnexion (40) comprenant au moins un élément de transmission (41) conçu pour relier en mouvement un rouleau (10) à au moins un rouleau supplémentaire (10) de ladite multiplicité,
éventuellement le transporteur comprenant une pluralité desdits éléments de transmission (41) dont chacun est conçu pour relier en mouvement une paire de rouleaux consécutifs (10).

6. Wagon selon la revendication précédente, chaque élément de transmission (41) comprenant :
- au moins deux roues d'entraînement (42) chacune accouplée à un rouleau respectif (10) et solidaires en rotation de celui-ci, éventuellement solidaires d'un rouleau entraîné (14) ou d'un rouleau motorisé (13) ; et
- au moins un élément de traînage (43) conçu pour relier en mouvement, dans la rotation desdites au moins deux roues d'entraînement (42) et par conséquent pour relier en mouvement les rouleaux accouplés auxdites roues d'entraînement (42), éventuellement ledit élément de traînage (43) étant conçu pour la liaison en rotation de deux roues d'entraînement (42) portées par deux rouleaux (10) immédiatement consécutifs l'un par rapport à l'autre le long de ladite trajectoire prédéterminée.

7. Wagon selon la revendication précédente, chacune desdites roues d'entraînement (42) de l'élément de transmission (41) comprenant une roue ou une couronne dentée,
l'élément de traînage (43) comprenant:
- une bande transporteuse ou une chaîne enroulée en une boucle fermée autour d'au moins deux roues d'entraînement (42) portées par deux rouleaux respectifs immédiatement consécutifs l'un par rapport à l'autre par rapport à ladite trajectoire prédéterminée, ladite au moins une bande transporteuse ou chaîne étant conçue pour relier en rotation lesdites roues d'entraînement autour desquelles elle est enroulée; ou
- au moins une roue de transfert intermédiaire comprenant une roue ou une couronne dentée en engagement avec lesdites roues d'entraînement (42), portées par deux rouleaux respectifs immédiatement consécutifs l'un par rapport à l'autre par rapport audit trajet prédéterminé, et conçue pour la liaison de ces derniers en rotation.

8. Wagon selon l'une quelconque des revendications de 5 à 7, chacun des rouleaux (10) de ladite multiplicité s'étendant en longueur entre une première et une seconde portion d'extrémité (15a, 15b), le au moins un élément de transmission (41) étant disposé en correspondance d'au moins l'une de ladite première et de ladite seconde portion d'extrémité (15a, 15b), éventuellement un élément de transmission (41) étant disposé au niveau de chacune de ladite première et de ladite seconde portion d'extrémité (15a, 15b).

9. Wagon selon la revendication précédente, une première pluralité d'éléments de transmission (41) étant disposée au niveau de la première portion d'extrémité (15a) de la multiplicité de rouleaux et une seconde pluralité correspondante d'éléments de transmission (41) étant disposée au niveau de la seconde portion d'extrémité (15b) de la même multiplicité de rouleaux, à savoir en opposition à la première pluralité des éléments de transmission par rapport aux rouleaux eux-mêmes.

10. Wagon selon l'une quelconque des revendications de 6 à 9, chaque rouleau (10) de ladite multiplicité comprenant, en correspondance d'au moins l'une de la première et d'une seconde portion d'extrémité (15a, 15b), au moins une roue d'entraînement principale (42a) et au moins une roue d'entraînement auxiliaire (42b) distincte et axialement espacée de ladite roue d'entraînement principale (42a),
la roue d'entraînement principale (42a) d'un premier rouleau (10) étant reliée à l'aide d'un élément de traînage (43) à une roue d'entraînement (42) d'un second rouleau (10) adjacent et immédiatement consécutif au premier rouleau le long de ladite trajectoire prédéterminée,
et la roue d'entraînement auxiliaire (42b) dudit premier rouleau (10) étant reliée à l'aide d'un élément de traînage (43) à une roue d'entraînement (42) d'un troisième rouleau (10) adjacent et immédiatement consécutif au premier rouleau le long de ladite trajectoire prédéterminée,
ledit premier rouleau étant interposé entre lesdits second et troisième rouleau de ladite multiplicité par rapport à ladite trajectoire d'alignement prédéterminée desdits rouleaux.

11. Wagon selon l'une quelconque des revendications précédentes, les rouleaux (10) de ladite multiplicité ayant une forme cylindrique ayant un diamètre prédéterminé, les axes de rotation (A) desdits rouleaux étant espacés les uns des autres d'une valeur inférieure à 5 fois ledit diamètre, éventuellement inférieure à 3 fois le diamètre, même plus facultativement entre 1,25 et 2,5 fois.

12. Wagon selon l'une quelconque des revendications précédentes, chaque rouleau (10) de ladite multiplicité comprenant:
- des portions d'engagement (10a) respectives placées au niveau de la première et de la seconde portion d'extrémité (15a, 15b) et conçues pour contraindre le châssis (1) du transporteur,
- un corps de support central (10b) placé en interposition, éventuellement en liaison, avec lesdites portions d'engagement (10a),
ledit corps de support central (10b), éventuellement exclusivement ledit corps de support central (10b), étant conçu pour recevoir en support la bande transporteuse (20).

13. Wagon selon la revendication précédente, le système d'interconnexion (40), éventuellement les éléments de transmission (41), étant placés à côté du corps de support central (10b) des rouleaux de la multiplicité des rouleaux, en particulier le système d'interconnexion (40), éventuellement les éléments de transmission (41), étant disposés sur le côté de la portion d'engagement (10a) de la multiplicité des rouleaux sur le côté opposé par rapport au corps de support central (10b) de ladite multiplicité de rouleaux.

14. Wagon selon la revendication 12 ou 13 lorsque la revendication 12 dépend de la revendication 10 ou 11, chaque rouleau de ladite multiplicité de rouleaux comprenant au moins une roue d'entraînement principale (42a) et au moins une roue d'entraînement auxiliaire (42b) qui sont placées au niveau du côté du corps de support central (10b).

15. Wagon selon l'une quelconque des revendications précédentes, le transporteur comprenant une structure de confinement (60) ayant:
- une structure de support (62),
- des têtes de tablier latérales (61) contraintes et supportées par la structure de support (62) et disposées aux portions latérales de la bande transporteuse (20), les têtes de tablier latérales (61) s'étendant en hauteur au-dessus de l'étendue fonctionnelle (21) de la bande transporteuse (20) pour contenir le matériau se déplaçant sur la bande transporteuse.
